# EUROPÄISCHE PATENTSCHRIFT

(11) **EP 0 848 249 B1**
(45) Veröffentlichungstag und Bekanntmachung des Hinweises auf die Patenterteilung: **07.07.2004**
(21) Anmeldenummer: 97121648.6
(22) Anmeldetag: 09.12.1997
(51) Int. Cl.: G01N 27/12

(54) **Temperaturregelung für Gassensoren**
Temperature regulation for gas sensors
Régulation de température pour des capteurs de gaz

(30) Priorität: 11.12.1996 DE 19651328
(43) Veröffentlichungstag der Anmeldung: 17.06.1998
(73) Patentinhaber: Jürgen Dittrich Elektronik, 76532 Baden-Baden (DE)
(72) Erfinder: Dittrich, Jürgen, 76532 Baden-Baden (DE)
(74) Vertreter: Haber, Jan Wilhelm

(56) Entgegenhaltungen:
- US-A- 4 500 412
- US-A- 4 953 387
- PATENT ABSTRACTS OF JAPAN vol. 10, no. 7 (P-419), 11.Januar 1986 & JP 60 164241 A (NIPPON DENSO KK), 27.August 1985,

## Beschreibung

Die Erfindung betrifft einen Gas-sensor nach dem Oberbegriff des Anspruch 1.

Es sind Gassensoren bekannt, die auf eine Temperatur von etwa 600°C aufgeheizt werden und die in diesem Zustand des Sauerstoffgehalt in der umgebenden Atmosphäre messen. Die Heizung derartiger Gassensoren erfolgt über eine Heizwendel, die an der Meßkammer oder in der Nähe der Meßkammer angebracht ist Derartige Gassensoren sind nicht temperaturgeregelt, so daß sich eine Änderung der Umgebungstemperatur zwangsläufig eine Änderung der Meßspannung hervorruft. Um genaue Meßergebnisse zu erhalten sind aufwendige Kompensations-rechnungen nötig.

Es sind Gassensoren bekannt, bei denen sich der Heizstrom in Abhängigkeit der Temperatur, die mit einem separaten Temperaturfühler gemessen wird, einstellen läßt. Bei einer solchen Regelung ist der Temperaturfühler der Regelgrößenaufnehmer und die Heizwendel das Stellglied. Derartige Sonden sind vergleichsweise teuer und aufwendig in der Fertigung.

Sensoren zur Messung der Sauerstoffkonzentration in Auspuffgasen sind aus US 4,500,412 bekannt. Diese Sensoren sind sehr spezifisch für diese Anwendung konzipiert. Auch sie können über das zur Messung der Temperatur geeignete Widerstandselement geheizt werden.

Aufgabe der Erfindung ist es, einen Gassensor nach dem Oberbegriff des Anspruch 1 zu schaffen, der preiswert herzustellen ist.

Die Aufgabe wird erfindungsgemäß durch einen Gassensor nach Anspruch 1 gelöst.

Die Temperatur des Gassensors kann mit nur einem einzigen Widerstandselement genau eingestellt werden. Da das Widersandselement sowohl als Temperaturfühler als auch als Heizung benutzt wird, lassen sich weitere Bauteile einsparen. Dazu wird an das Widerstandselement zeitweise eine externe Spannungsquelle angeschlossen ist, über die dem Widerstandselement ein Heizstrom zuführbar ist. Es ist somit möglich, leistungsfähige und preiswerte Gassensoren zu fertigen, die sich durch eine hohe Genauigkeit auszeichnen. Ein weiterer Vorteil ist, daß es die einfache Bauweise den Einsatz von Materialien für die Widerstandselemente wie z.B. Nickel- oder Wolfram Legierungen erlaubt, die für bekannte Anordnungen nicht verarbeitet werden können.

Besonders vorteilhaft ist es, diese Regelung, bei der ein Widerstandselement sowohl als Regelgrößenaufnehmer als auch als Stellglied benutzt wird, bei Gassensoren insbesondere bei Pumpsonden einzusetzen, die im Dickschichtverfahren aus aufeinander geklebten Flächenelementen hergestellt werden. So kann das Widerstandselement in einfacher Weise z.B. durch Aufkleben in den Sandwich-Aufbau integriert werden. Vorteilhafterweise wird das Widerstandselement mit einem Keramikkleber auf eine Wandung der Meßkammer aufgeklebt. Das Widerstandselement hat je nach Aufbau des Gassensors bei Zimmertemperatur einen Widerstand zwischen einem Ohm und einem Kiloohm. Auf diese Weise werden hochgenaue und besonders kleine Pumpsonden gefertigt.

Besonders vorteilhaft ist es, für das Widerstandselement ein Platinelement zu verwenden. Derartige Platinelemente zeichnen sich durch eine große Linearität über einen weiten Temperaturbereich und durch große Temperaturkoeffizienten aus. Vorteilhafterweise wird ein bekanntes käufliches Platinelement insbesondere ein PT 20, das einen Widerstand von 20 Ohm bei Zimmertemperatur hat, auf die Wandung der Meßkammer des Gassensors aufgeklebt. Ein PT 20 hat gerade bei den kleinen Gassensoren ein besonders günstiges Leistungsverhältnis, wenn es als Heizwiderstand betrieben wird.

Vorteilhafterweise werden flächige, kommerziell erhältliche Widerstandselemente benutzt, auf die einzeine Kammerelemente mit flüssigem Glas oder einem Keramikkleber aufgeklebt werden. Auf diese Weise bildet das Widerstandselement den Boden einer kompakten robusten Pumpsonde. Durch diese Anordnung wird eine besonders homogene Erwärmung gewährleistet. Da die für die Pumpsonde verwendeten Materialien besonders hizeresistent sind, ist es möglich, den Sensor auf etwa 1000°C zu erwärmen, ohne daß der Schaden nimmt. Bei diesen hohen Temperaturen ist eine besonders sensible Schadstoffmessung möglich. Außerdem kann der Sensor in besonders heißen Bereichen, beispielsweise direkt hinter der Feuerung von Verbrennungsanlagen eingesetzt werden.

Widerstandselemente aus Edelmetall sind vorteilhaft, weil sie besonders resistent gegen die gerade bei den hohen Temperaturen auftretende Korrosion sind. Platinelemente tragen daher zur Erhöhung der Betriebssicherheit der Gassensoren bei.

Die elektrische Schaltung des Widerstandselementes erfolgt bekanntermaßen mit einer Brückenschaltung, mit der sich über den Spannungsabfall die Widerstandsänderung erfassen läßt. Durch diese Schaltung läßt sich gleichfalls die Temperatur optimal einstellen.

In einer anderen vorteilhaften Ausführungsform wird das Widerstandselement im Siebdruckverfahren auf die Wandung der Meßkammer aufgedruckt oder insbesondere mit Platin auf die Wandung der Meßkammer aufgedampft.

In einer vorteilhaften Ausführungsform ist der Gassensor im Siebdruckverfahren hergestellt. Dadurch ist die preiswerte Herstellung eines sehr robusten und kleinen Sensors möglich.

Ein Ausführungsbeispiel des erfindungsgemäßen Gassensors ist in den Zeichnungen dargestellt und wird im Folgenden näher beschrieben. Es zeigen:
- **Fig. 1**: einen Gassensor mit mehreren auf ein Widerstandselement aufgeklebten Kammerelementen,
- **Fig. 2**: einen Schnitt durch einen Gassensor und
- **Fig. 3**: ein Kontaktelement.
- **Fig. 4**: einen im Siebdruckverfahren hergestellten Gassensor.

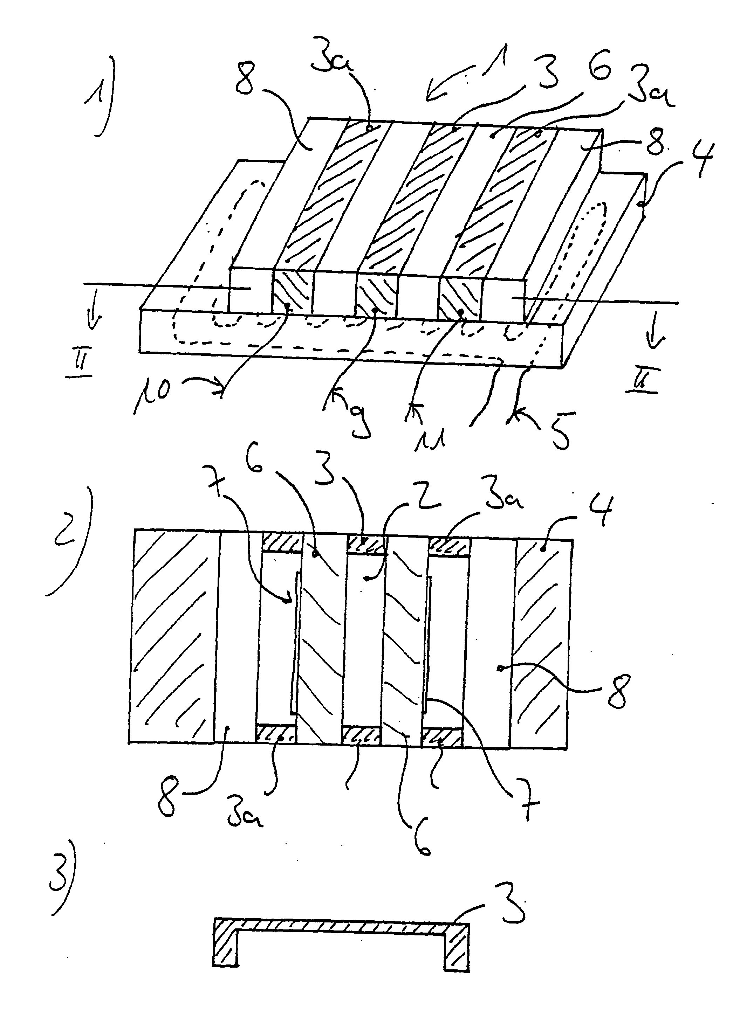

In Figur 1 ist ein Gassensor 1 dargestellt, der primär für die Messung von Sauerstoff ausgelegt ist. Der Gassensor 1 hat eine Meßkammer 2, in der ein Sauerstoffpartialdruck P2 herrscht. Die Meßkammer 2 ist umrandet von einem brückenförmigen Kontaktelement 3 aus Kohlenstoff oder leitenden Metall. Das Kontaktelement 3 ist mit einem temperaturbeständigen Keramikkleber auf ein flächiges Platin-Widerstandselement 4, das bei Zimmertemperatur einen Widerstand zwischen einem Ohm und einem Kiloohm insbesondere 20 Ohm (PT 20) hat, aufgeklebt. Über die Zuleitungen 5 kann einerseits der Spannungsabfall gemessen und andererseits über eine zeitweise angeschlossene externe Spannungsquelle dem Widerstandselement ein Heizstrom zugeführt werden. Die Heiz- bzw. Meßwendel ist mit einer unterbrochenen Linie dargestellt.

Zu beiden Seiten des Kontaktelementes 3 sind Elemente 6 aus Zirkondioxyd (ZrO₂) auf das Widerstandselement 4 aufgeklebt, so daß die abgeschlossene Meßkammer 2 mit Ionen- permeablen Wänden entsteht. Auf die Elemente 6 ist auf der Außenseite Katalysatormaterial 7 (Platin) aufgebracht.

Neben die Elemente 6 sind auf der der Meßkammer abgewandten Seite brückenförmige Kontaktelemente 3a auf das Widerstandselement 4 geklebt. Nach außen hin wird der durch die Kontaktelemente 3a gebildete Raum von quaderförmigen Keramikelementen 8 insbesondere aus Aluminiumoxyd begrenzt. Das Nullpotential der Pumpsonde liegt an der Leitung 9, der Pumpstrom wird über die Leitung 10 und die Sensorspannung über die Leitung 11 zugeführt.

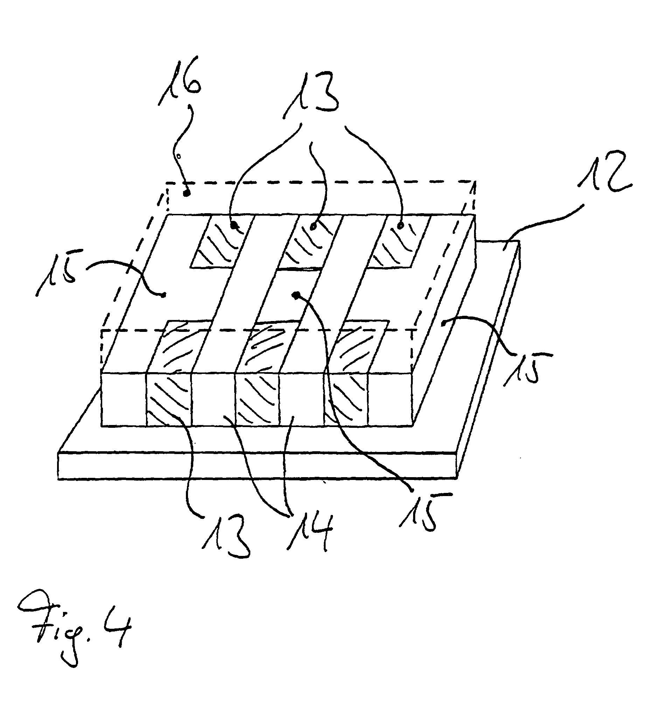

Figur 2 zeigt einen Schnitt durch einen Gassensor, der auf das Widerstandselement aufgeklebt ist. Zur Verdeutlichung der Geometrie ist in Figur 3 eine Seitenansicht eines Kontaktelementes 3 dargestellt.

Der Partialdruck P1 eines Gases in einem Gasgemisch, insbesondere in Luft, wird nach Art einer Pumpsonde gemessen. Dabei wird die Pumpsonde in einem ersten Verfahrensschritt (Heizphase) durch Stromzufuhr an ein Widerstandselement beheizt, während in einem zweiten Verfahrensschritt (Meßphase) die Temperatur des PT 20 mittels des Spannungsabfalls über dem Widerstandselement gemessen wird.

In Figur 4 sind ist der Aufbau eines Gassensors gezeigt, der im Siebdruckverfahren hergestellt ist. Dazu werden in einem ersten Verfahrenschritt sechs freistehende leitende Elemente 13 aus Platinpaste in zwei Reihen a drei auf ein Widerstandselement 12 gedruckt. Nach dem Aushärten im Ofen werden im nächsten Schritt zwei balkenförmige Kammerwände 14 aus Zirkondioxyd in gleicher Stärke zwischen die leitenden Elemente 13 gedruckt und ausgehärtet. In einem dritten Schritt werden Elemente aus O₂ durchlässiger Keramik 15 an die freien Seiten der Kammerwände 14 und in die freien Zwischenräume eingebracht. Nach dem Aushärten wird wird die Struktur mit einer Deckschicht 16 aus O₂ undurchlässiger Keramik bedeckt.

Mit dem beschriebenen Sensor läßt sich ein Verfahren zur Bestimmung des Partialdrucks eines Gases in einem Gasgemisch, insbesondere in Luft durchführen. Dazu wird über dem an der Meßkammer angebrachten Widerstandselement 4 wahrend einer ersten Betriebsphase (Meßphase) der der Spannungsabfall gemessen. In einer zweiten Betriebsphase (Heizphase) wird dann am Widerstandselement 4 eine Spannung angelegt, so daß ein Strom fließt, der den Gassensor (1) heizt. Somit wird das Widerstandselement 4 sowohl zum Messen der Temperatur als auch zum Heizen des Gassensors benutzt.

## Patentansprüche

1. Gassensor (1) zur Bestimmung des Partialdrucks eines Gases in einem Gasgemisch, insbesondere in Luft, aufweisend eine Meßkammer (2) und aufweisend ein Widerstandselement (4), das zur Messung der Temperatur der Messkammer und zum Heizen der Messkammer dient, wobei das Widerstandselement (4) zeitweise an eine externe Spannungsquelle anschließbar ist, die dem Widerstandselement (4) einen Heizstrom zuführt,
**dadurch gekennzeichnet, dass**
die Meßkammer (2) nebeneinander angeordnete Kammerelemente (3,6) aufweist, die auf das Widerstandselement (4) aufgebracht sind, wobei ein mittleres der Kammerelemente von einem brückenförmigen Kontaktelement (3) gebildet ist, das die Meßkammer (2) über dem Widerstandselement (4) überspannt, wobei die zu beiden Seiten des Kontaktelementes (3) aufgebrachten Elemente (6) ionenpermeable Wände der Messkammer (2) bilden, wobei an die ionenpermeable Wände (6) jeweils ein brückenförmiges äußeres Kontaktelement (3a) angrenzt, wobei die Messkammer durch das Widerstandselement (4), das Kontaktelement (3) und die ionenpermeablen Wände abgeschlossen ist und wobei an die beiden äußeren Kontaktelemente (3a) jeweils ein abschließendes Keramikelement (4) angrenzt.

2. Gassensor nach Anspruch 1,
**dadurch gekennzeichnet, dass** das Widerstandselement (4) bei Zimmertemperatur einen Widerstand zwischen einem Ohm und einem Kiloohm hat.

3. Gassensor nach Anspruch 2,
**dadurch gekennzeichnet, dass** das Widerstandselement (4) ein Platinwiderstandselement (PT 20) ist, das einen Widerstand von etwa 20 Ohm bei Zimmertemperatur aufweist.

4. Gassensor nach einem der vorherigen Ansprüche,
**dadurch gekennzeichnet, dass** die Kammerelemente auf das Widerstandselement (4) aufgeklebt sind.

5. Gassensor nach einem der vorherigen Ansprüche,
**dadurch gekennzeichnet, dass** das Widerstandselement (4) im Siebdruckverfahren auf die Wandung der Meßkammer (2) oder die Kammerelemente (13,14,15,16) im Siebdruckverfahren auf das Widerstandselement (12) aufgedruckt sind.

6. Gassensor nach einem der vorherigen Ansprüche,
**dadurch gekennzeichnet, dass** das Widerstandselement (4) insbesondere mit Platin auf die Wandung der Meßkammer aufgedampft ist.

7. Gassensor nach einem der vorherigen Ansprüche,
**dadurch gekennzeichnet , dass** das Keramikelement (4) quaderförmig ist.

8. Gassensor nach einem der vorherigen Ansprüche,
**dadurch gekennzeichnet, dass** die ionenpermeablen Wände (6) von quaderförmigen Zirkondioxydelementen gebildet sind.

9. Gassensor nach Anspruch 8,
**dadurch gekennzeichnet, dass** das Kontaktelement (3) von den Zirkondioxydelementen (6) eingeschlossen und damit abgedichtet ist.

## Claims

1. A gas sensor (1) for determining the partial pressure of a gas in a gas mixture, more specifically in air, said gas sensor comprising a measuring chamber (2) and comprising a resistor element (4) for measuring the temperature of the measuring chamber and for heating said measuring chamber, the resistor element (4) being at times connectable to an external voltage source that supplies a heating current to the resistor element (4),
**characterized in that**
the measuring chamber (2) comprises chamber elements (3, 6) that are disposed side by side and are placed onto the resistor element (4), a central one of the chamber elements being formed by a bridge-shaped contact element (3) straddling the measuring chamber (2) above the resistor element (4), the elements (6) placed on either side of the contact element (3) forming ion permeable walls of the measuring chamber (2), a bridge-shaped outer contact elements (3a) being adjacent a respective one of the ion permeable walls (6), the measuring chamber being enclosed by the resistor element (4), the contact element (3) and the ion permeable walls, and a ceramic end element (4) being adjacent the respective one of the two outer contact elements (3a).

2. The gas sensor in accordance with claim 1,
**characterized in that**,
at room temperature, the resistance of the resistor element (4) is between one Ohm and one kiloOhm.

3. The gas sensor in accordance with claim 2,
**characterized in that**
the resistor element (4) is a platinum resistor element (PT 20) the resistance of which is about 20 Ohms at room temperature.

4. The gas sensor in accordance with any of the afore mentioned claims,
**characterized in that**
the chamber elements are glued onto the resistor element (4).

5. The gas sensor in accordance with any of the afore mentioned claims,
**characterized in that**
the resistor element (4) is screen printed onto the wall of the measuring chamber (2) or that the chamber elements (13, 14, 15, 16) are screen printed onto the resistor element (12).

6. The gas sensor in accordance with any of the afore mentioned claims,
**characterized in that**
the resistor element (4) is vapor deposited, more specifically with platinum, on the wall of the measuring chamber.

7. The gas sensor in accordance with any of the afore mentioned claims,
**characterized in that**
the ceramic element (4) is cuboid.

8. The gas sensor in accordance with any of the afore mentioned claims,
**characterized in that**
the ion permeable walls (6) are formed from cuboid zirconium dioxide elements.

9. The gas sensor in accordance with claim 8,
**characterized in that**
the contact element (3) is enclosed by the zirconium dioxide elements (6) and is sealed as a result thereof.

## Revendications

1. Capteur de gaz (1) destiné à déterminer la pression partielle d'un gaz dans un mélange gazeux, notamment dans l'air, et comportant une chambre de mesure (2) et un élément résistif (4) servant à mesurer la température dans la chambre de mesure et à chauffer celle-ci, l'élément résistif (4) étant apte à être raccordé par moments à une source de tension externe alimentant l'élément résistif (4) en courant de chauffage,
**caractérisé en ce que**
la chambre de mesure (2) comporte des éléments de chambre (3, 6) qui sont disposés côte à côte et placés sur l'élément résistif (4), un élément de chambre central étant formé par un élément de contact (3) en forme de pont enjambant la chambre de mesure (2) au-dessus de l'élément résistif (4), les éléments (6) placés de chaque côté de l'élément de contact (3) formant les parois perméables aux ions de la chambre de mesure (2), un élément de contact extérieur (3a) en forme de pont étant contigu à chacune des parois perméables aux ions (6), la chambre de mesure étant close par l'élément résistif (4), l'élément de contact (3) et les parois perméables aux ions, un élément en céramique d'extrémité (4) étant contigu à chacun des deux éléments de contact extérieurs (3a).

2. Capteur de gaz selon la revendication 1,
**caractérisé en ce que**,
à température ambiante, l'élément résistif (4) a une résistance comprise entre un ohm et un kilohm.

3. Capteur de gaz selon la revendication 2,
**caractérisé en ce que**
l'élément résistif (4) est un élément résistif de platine (PT 20) qui, à température ambiante, a une résistance d'environ 20 ohms.

4. Capteur de gaz selon l'une quelconque des revendications précédentes,
**caractérisé en ce que**
les éléments de chambre sont collés sur l'élément résistif (4).

5. Capteur de gaz selon l'une quelconque des revendications précédentes,
**caractérisé en ce que**
l'élément résistif (4) est sérigraphié sur la paroi de la chambre de mesure (2) ou que les éléments de chambre (13, 14, 15, 16) sont sérigraphiés sur l'élément résistif (12).

6. Capteur de gaz selon l'une quelconque des revendications précédentes,
**caractérisé en ce que**
l'élément résistif (4) est déposé et métallisé par évaporation notamment de platine sur la paroi de la chambre de mesure.

7. Capteur de gaz selon l'une quelconque des
revendications précédentes,
**caractérisé en ce que**
l'élément en céramique (4) est cubique.

8. Capteur de gaz selon l'une quelconque des revendications précédentes,
**caractérisé en ce que**
les parois perméables aux ions (6) sont formées par des éléments en dioxyde de zirconium de forme cubique.

9. Capteur de gaz selon la revendication 8,
**caractérisé en ce que**
l'élément de contact (3) est entouré par les éléments en dioxyde de zirconium (6) et est ainsi hermétiquement isolé.
